# EUROPÄISCHE PATENTSCHRIFT

(11) **EP 3 256 770 B1**
(45) Veröffentlichungstag und Bekanntmachung des Hinweises auf die Patenterteilung: **10.07.2019**
(21) Anmeldenummer: 16705894.0
(22) Anmeldetag: 09.02.2016
(51) Int. Cl.: F16L 59/14, F16L 59/153

(54) **LEITUNGSROHR MIT THERMISCHER DÄMMUNG**
CONDUIT COMPRISING THERMAL INSULATION
CONDUITE À ISOLATION THERMIQUE

(30) Priorität: 11.02.2015 CH 1812015
(43) Veröffentlichungstag der Anmeldung: 20.12.2017
(73) Patentinhaber: Brugg Rohr Ag Holding, 5200 Brugg (CH)
(72) Erfinder: KRESS, Jürgen, 8966 Oberwil-Lieli (CH)
(74) Vertreter: Grimm, Siegfried
(86) Internationale Anmeldenummer: PCT/CH2016/000027
(87) Internationale Veröffentlichungsnummer: WO 2016/127267

(56) Entgegenhaltungen:
- DE-A1- 10 021 523
- DE-U1-202008 014 092

## Beschreibung

### Gebiet der Erfindung

Die Erfindung betrifft ein thermisch gedämmtes Leitungsrohr gemäss Oberbegriff des Anspruchs 1. Ferner betrifft die Erfindung ein Verfahren zur Herstellung von thermisch gedämmten Leitungsrohren nach Anspruch 7 oder 12.

### Hintergrund

Thermisch gedämmte Leitungsrohre bzw. Leitungsrohre mit einer Wärmedämmschicht oder mehreren Wärmedämmschichten sind bekannt; ebenso Verfahren zu deren Herstellung. So sind aus EP-0 897 788 A1 und aus EP-2 213 440 A1 Verfahren zur kontinuierlichen Herstellung von thermisch gedämmten Leitungsrohren bekannt. Aus EP-2 248 648 A1 ist ein Verfahren zur Herstellung von einzelnen, starren Rohrabschnitten bekannt. Aus DE-100 21 523 A1 sind thermisch gedämmte Leitungsrohre mit einer Sperrschicht aus einem polymeren Werkstoff und einem Aussenrohr aus einem vernetzen polymeren Werkstoff bekannt. Solche thermisch gedämmten Rohre haben sich bewährt.

Bei solchen Rohrsystemen verändert sich bei dem in der Regel als Dämmmaterial verwendeten Polyurethanschaum (PU-Schaum) im Laufe der Zeit dessen Gaszusammensetzung. Dies geschieht durch Diffusion von Stickstoff und Sauerstoff aus der Luft in den Schaum hinein und durch Diffusion der ursprünglich im Schaum enthaltenen Schäum- bzw. Zellgase, insbesondere Kohlendioxid, aus dem Schaum heraus. Die Luftgase haben eine deutlich höhere thermische Leitfähigkeit als das ursprünglich enthaltene Kohlendioxid. Um diese Diffusionsprozesse zu minimieren wurde vorgeschlagen, sogenannte Barriereschichten in das Leitungsrohr zu integrieren. Dabei können metallische Schichten zur Anwendung kommen oder Schichten, die aus einem oder mehreren polymeren Materialien bestehen. Dies ist z.B. beschrieben in der EP-1 355 103 A1 oder der EP-2 340 929 A1.

Bei der Verwendung von metallischen Schichten wird nicht nur der Gasaustausch vollständig unterbunden, was erwünscht ist, sondern es wird auch Wasserdampf komplett an der Diffusion gehindert. Dies ist bei der Verwendung von Innenrohren aus Kunststoff problematisch, da durch diese dauerhaft meist warmes Wasser fliesst, weshalb durch deren Wände beständig eine, wenn auch nur geringe Menge, Wasserdampf migriert. Dieser Wasserdampf muss die Möglichkeit haben nach aussen zu dringen bzw. mit der Umgebung ins Gleichgewicht zu kommen, weil sich sonst im Laufe der Zeit Wasser in der Wärmedämmung des Leitungsrohrs anreichern würde. Dadurch würde die thermische Leitfähigkeit deutlich ansteigen.

Bisher sind für thermisch gedämmte Rohrsysteme Barriereschichten aus Poylvinylidendichlorid (PVDC) und Ethylenvinylalkohol (EVOH) diskutiert worden. Problematisch an PVDC ist die Tatsache, dass ab einer Temperatur im Bereich von 200 °C bereits Zersetzung eintritt. Für den Betrieb der Rohre ist das unkritisch, jedoch bei der Herstellung thermisch gedämmter Leitungsrohre ist das ein ernstzunehmendes Hindernis. Weil die Bariereschicht als Teil des Mantels verarbeitbar sein soll, muss sie gemeinsam mit dem eigentlichen Mantelmaterial, typischerweise Polyethylen (PE), verarbeitet werden. Bei der Extrusion von PE sind Temperaturen von 170 - 190 °C üblich, die sehr nahe an der Zersetzungstemperatur des PVDC liegen, welches dabei gesundheitsschädliche Gase freisetzen kann. In einem kontinuierlichen Produktionsprozess ist das wegen der dann notwendigen Investitionen in die entsprechende Infrastruktur und dem Risiko für die Produktionsmitarbeiter höchst unerwünscht. Darüber hinaus sind die Barriereeigenschaften nicht so gut wie diejenigen von EVOH.

Bei EVOH ist indes eine starke Abhängigkeit der Barriereeigenschaften von den Umgebungsbedingungen gegeben, insbesondere von der Luftfeuchtigkeit. Zudem ist die Barrierewirkung von EVOH stark abhängig von der konkreten Zusammensetzung des Copolymers. Mit steigendem Gehalt an Vinylalkohol nimmt die Barrierewirkung zwar zu, aber dafür wird das Polymer auch immer spröder. Dies ist insbesondere bei Anwendungen, wo Leitungsrohre gebogen werden sollen, nicht erwünscht. Ein grosser Nachteil von EVOH ist weiterhin, dass immer ein Haftvermittler notwendig ist. Bei der Aufbringung von EVOH auf eine PE-Mantelschicht, beispielsweise durch Extrusion, ist eine zusätzliche Schicht eines Haftvermittlers zwingend. Für den Fall einer kontinuierlichen Produktion, wie sie z. B. in der EP-0 897 788 A1 beschrieben ist, würde das bedeuten, dass im einfachsten Fall auf die den PU-Schaum umgebende Folie zunächst eine Haftvermittler Schicht aufgebracht würde, dann die EVOH Schicht, dann eine weitere Schicht Haftvermittler und erst dann würde die Extrusion des eigentlichen PE-Mantels erfolgen. Allein für die polymere Barriere würde also eine Dreischicht-Coextrusion benötigt. EP-2 340 929 A1 zeigt die Variante, bei der die Barriereschicht zwischen zwei dünneren Schichten des PE Mantels liegt, was erwünscht sein kann, um die Barriereschicht mechanisch besser zu schützen. In diesem Fall ist die Schichtabfolge PE-Mantel / Haftvermittler / EVOH / Haftvermittler / PE-Mantel nur durch eine Fünfschicht-Coextrusion zu erreichen. Die Notwendigkeit des Haftvermittlers erhöht also den apparativen Aufwand und die Kosten enorm.

Zur Verbindung von thermisch isolierten Rohren werden Formteile und Verbindungsstücke verwendet. Insbesondere werden als Formteile Abdeckschalen verwendet, wie in WO 2008/019791 A1 beschrieben. Oder es werden als Verbindungsstücke Muffen verwendet, insbesondere um starre Rohre miteinander zu verbinden. Auch bei solchen Formteilen und Verbindungsstücken stellen sich die genannten Probleme.

### Darstellung der Erfindung

Es ist Aufgabe der Erfindung ein thermisch gedämmtes Leitungsrohr zu schaffen, welches die genannten Nachteile nicht aufweist.

Dies wird durch ein thermisch gedämmtes Leitungsrohr mit dem kennzeichnenden Merkmal des Anspruchs 1 erreicht.

Es hat sich gezeigt, dass ein Leitungsrohr der eingangs genannten Art, bei dem die Barriere ein Polymer umfasst, welches Polyketone enthält oder aus Polyketonen besteht, die Anforderungen sehr gut erfüllt.

Bevorzugt ist die Barriere als Schicht zwischen der Wärmedämmung und dem Aussenmantel angeordnet. Die Barriere kann aber auch als Schicht im Aussenmantel angeordnet sein Es ist auch möglich, dass die Barriere vom Aussenmantel gebildet wird.

Erfindungsgemäss wird die Barriere aus einem Polymer gebildet, welches Polyketone enthält oder aus Polyketonen besteht. Entsprechend umfasst die Polymerschicht Polyketone und Blends von Polyketonen sowie Laminate enthaltend Polyketone. Polyketone sind an sich bekannte Materialien und charakterisiert durch die Keto-Gruppe (C=O) in der Polymerkette. Polyketone umfassen somit Polymere, welche zu 50 - 100 Gew.%, bevorzugt zu 90-100 Gew.% Struktureinheiten der Formel (I) enthalten

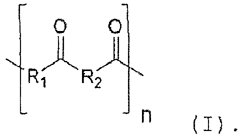

Der Begriff Polyketone umfasst die einfachen Polyketone (PK) in welchen R¹ und R² unabhängig voneinander jeweils für Alkyl (wie 1,2-Ethyl und 1,2-Propyl) steht. Einfache Polyketone sind durch katalytische Umsetzung von Kohlenmonoxid mit den entsprechenden Alkenen, wie Propen und/oder Ethen, erhältlich. Solche Polyketone sind bspw. unter dem Handelsnamen Akrotek kommerziell erhältlich. Solche einfachen Ketone werden auch als aliphatische Ketone bezeichnet.

Der Begriff Polyketone umfasst ferner die Polyetherketone (PEK) in welchen R¹ für Alkylether oder Arylether und R² für Alkyl oder Aryl steht. Polyetherketone umfassen auch deren Derivate, wie PEEK, PEKK. In einer Ausführungsform umfasst der Begriff Polyetherketone in denen R¹ für Arylether und R² für oder Aryl steht solche Polyketone werden auch als aromatische Polyketone bezeichnet. Polyetherketone sind bspw. durch Umsetzung von bi-substituierten Alkyl- bzw. Arylketonen mit Diolen bzw. Biphenolen erhältlich. Solche Polyketone sind bspw. unter dem Handelsnamen Victrex kommerziell erhältlich.

Der Begriff Alkyl steht insbesondere für unsubstituiertes C1-C4 Alkyl; der Begriff Aryl steht insbesondere für Phenyl und Naphtyl.

Dem Fachmann sind auf Polyketonen basierende Polymere bekannt und diese sind Handelsprodukte. So stellt die koreanische Fa. Hyosung ein Basispolymer her. Es handelt sich um ein Terpolymer bestehend aus Ethylen, Propylen und Kohlenmonoxid oder ein Copolymer gebildet aus Ethylen und Kohlenmonoxid. Verschiedene Firmen verarbeiten dieses Basispolymer und bieten entsprechende Rezepturen in Form von Granulaten an, die dann in Extrusion oder Spritzguss weiterverarbeitet werden können. Es können die Firmen Ria-Polymers GmbH oder Akro-Plastik als Lieferanten genannt werden. Die vorstehend genannten aliphatischen Ketone haben sich als besser geeignet für das nachstellend beschriebene Herstellungsverfahren gezeigt und sind daher bevorzugt.

Das Leitungsrohr kann ein Wellrohr sein oder kann ein starres gerades Rohrstück sein.

Das Innenrohr kann aus polymerem Werkstoffen oder metallischem Werkstoffen, bevorzugt aus polymeren Werkstoffen bestehen. Solche Materialien sind an sich bekannt und umfassen insbesondere Polyolefine, wie vernetztes Polyethylen.

Bevorzugt ist die Barriere eine Schicht, welche eine Dicke von 50 µm bis 300 µm aufweist. Die Barriere kann eine Dicke von 0,5 mm bis 5 mm aufweisen.

Das Leitungsrohr ist bevorzugt so gebildet, dass das Polymer zu 50 - 100 Gew.%, bevorzugt zu 90-100 Gew.% Struktureinheiten der Formel (I) enthält 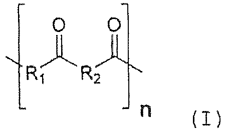
worin R¹ und R² unabhängig voneinander für Alkyl, insbesondere Ethyl und Propyl steht oder
worin R¹ für Alkylether oder Arylether und R² für Alkyl oder Aryl steht.

Der Erfindung liegt weiter die Aufgabe zu Grunde, ein verbessertes Verfahren zur Herstellung eines Leitungsrohrs zu schaffen.

Dies wird bei einem Verfahren zur Herstellung eines thermisch gedämmten Leitungsrohrs gemäss Anspruch 1 mit mindestens einem Innenrohr, einer Wärmedämmschicht und einem Aussenmantel, wobei
- das mindestens eine Innenrohr kontinuierlich von einem Vorrat abgezogen und mit einer zu einem Schlauch geformten Kunststofffolie umhüllt wird,
- in den Raum zwischen Innenrohr und Schlauch ein aufschäumbarer Kunststoff als Wärmedämmschicht eingebracht wird,
- das Innenrohr und der Schlauch in ein aus mitlaufenden Formteilen gebildetes Werkzeug eingebracht werden und dieses Werkzeug an dessen Ende verlassen, und danach
- auf die Oberfläche des Schlauches der Aussenmantel extrudiert wird,
dadurch erreicht, dass bei bei der Herstellung(A) eine Barriere aus einem Polymer zwischen der aufgeschäumten Wärmedämmschicht und der Aussenseite des Aussenmantels eingebracht wird, oder(B) dass der Aussenmantel aus dem Polymer gebildet wird oder(C) dass der Aussenmantel aus dem Polymer besteht; und wobei besagtes Polymer Polyketone enthält oder aus Polyketonen besteht.

Es zeigt sich, dass ein so gebildetes Leitungsrohr die zuvor geschilderten Nachteile vermeidet.

Bevorzugt wird die Barriere zwischen der aufgeschäumten Wärmedämmschicht und der Innenseite des Aussenmantels derart eingebracht, indem der Schlauch aus dem Polymer gebildet wird.

In einer anderen Ausführung des Verfahrens wird die Barriere durch Coextrusion zusammen mit dem Aussenmantel aufgebracht. Dies kann so erfolgen, dass die Barriere direkt auf den Schlauch aufgebracht wird. In einer anderen Ausführung kann dies so erfolgen, dass zunächst eine Schicht des Aussenmantels, gefolgt durch die Barriere und gefolgt durch mindestens eine zweite Schicht des Aussenmantels aufgebracht wird.

Das Verfahren kann so ausgeführt werden, dass zusätzlich eine Barriere, wie geschildert, in radialer Richtung nach der Wärmedämmung folgt.

Der Erfindung liegt ferner die Aufgabe zu Grunde ein verbessertes diskontinuierliches Verfahren zu schaffen, welches die genannten Nachteile vermeidet.

Dies erfolgt bei einem Verfahren zur Herstellung eines thermisch gedämmten Leitungsrohrs mit mindestens einem Innenrohr, einer Wärmedämmschicht und einem Aussenmantel, wobei ein Innenrohr innerhalb eines Aussenrohrs zentriert wird - was auf verschiedene an sich bekannte Weise erfolgen kann - und der Raum zwischen dem Innenrohr und dem Aussenrohr mit einem thermisch dämmenden, geschäumten Kunststoffmaterial gefüllt wird, insbesondere mit einem PU-Schaum gefüllt wird, dadurch, dass bei der Herstellung eine Barriere aus einem Polymer zwischen der aufgeschäumten Wärmedämmschicht und der Aussenseite des Aussenmantels eingebracht wird, welches Polymer Polyketone enthält oder aus Polyketonen besteht.

Die Barriere kann an der Innenseite des Aussenrohrs aufgebracht werden. Insbesondere kann das Aussenrohr bereits bei seiner Herstellung mit einer solchen Barriere versehen worden sein. Die Barriere kann alternativ oder zusätzlich im Aussenrohr vorgesehen werden. Bevorzugt wird die Barriere als Schicht mit einer Dicke von 50 um bis 300 µm vorgesehen.

Es kann auch vorgesehen sein, dass das Material des Aussenrohrs das Polymer enthält oder aus diesem besteht.

Das Verfahren wird bevorzugt so durchgeführt, dass das Polymer zu 50 - 100 Gew.%, bevorzugt zu 90-100 Gew.% Struktureinheiten der Formel (I) enthält 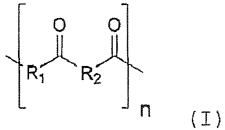
worin R¹ und R² unabhängig voneinander für Alkyl, insbesondere Ethyl und Propyl steht oder
worin R¹ für Alkylether oder Arylether und R² für Alkyl oder Aryl steht.

Es zeigt sich, dass eine Barriere mit oder aus Polyketonen gute Barriereeigenschaften gegen Stickstoff, Kohlendioxid, Treibmittel auf der Basis von Kohlenwasserstoffen (z.B. Cyclopentan) und gegen Hydrofluorolefine (HFO) aufweist. Eine solche Barriere erlaubt somit auch den Einsatz in Kombination mit derzeit noch nicht allgemein üblichen Wärmedämmschäumen. Ferner ist die Barriere gemäss der vorliegenden Erfindung auch bei hoher Luftfeuchtigkeit gut einsetzbar.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1 schematisch eine Vorrichtung zur kontinuierlichen Herstellung von thermisch gedämmten Rohren;
Figur 2 zeigt schematisch die Herstellung von einzelnen starren thermisch gedämmten Rohrstücken;
Figur 3 zeigt schematisch Beispiele für den Schichtaufbau eines thermisch gedämmten flexiblen Leitungsrohrs mit einer gewellten Form der Wärmedämmung und des Aussenmantels;
Figur 4 zeigt schematisch Beispiele für den Schichtaufbau eines thermisch gedämmten starren Leitungsrohrs mit einem glatten Aussenmantel; und
Figur 5 zeigt ein Formteil zur Abdeckung der Verbindung thermisch gedämmter Leitungsrohre.

### Weg(e) zur Ausführung der Erfindung

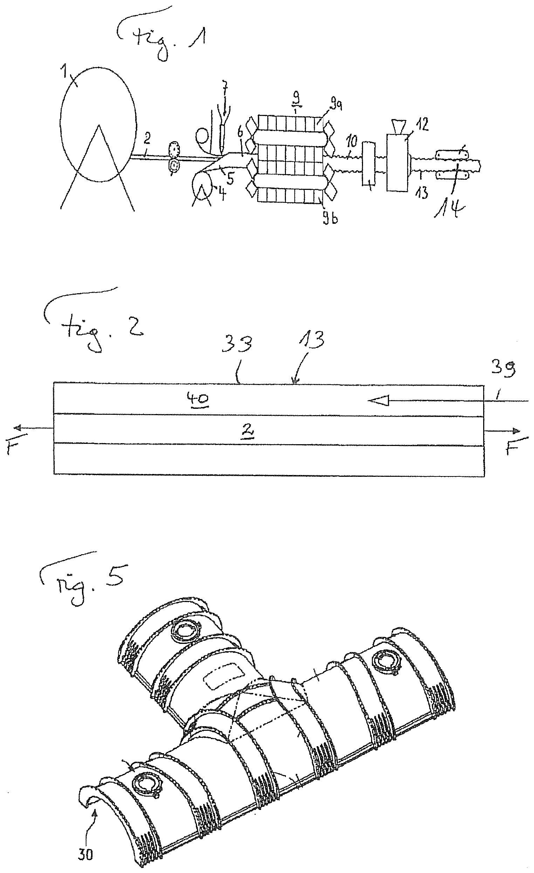

In Figur 1 ist die aus EP-0 897 788 A1 bekannte Anlage zur kontinuierlichen Herstellung von thermisch gedämmten Leitungsrohren dargestellt. Von einer Vorratsrolle 1 wird das Innenrohr 2 abgewickelt. Eine Kunststoff-Folie 5 wird von einem Vorrat 4 dem Innenrohr 2 zugeführt und zu einem Schlauch 6 mit einer verklebten oder verschweissten Längsnaht geformt, welcher sich um das Innenrohr legt. In den Raum zwischen Innenrohr 2 und Schlauch 6 wird ein aufschäumendes Kunststoffgemisch, vorzugsweise auf Polyurethanbasis, eingebracht, insbesondere mit einer Pistole 7. Das Innenrohr, der Schlauch und das aufschäumende Polyurethan werden einem Formwerkzeug 9 mit einer Vielzahl von Formhälften 9a und 9b zugeführt. Der Druck des PU-Schaums presst den Schlauch 6 gegen das Formwerkzeug und die von dem PU-Schaum gebildete thermische Dämmung nimmt die vom Formwerkzeug vorgegebene Form an, zum Beispiel eine gewellte Form, und tritt nach genügender Aushärtung im Formwerkzeug in dieser Form aus dem Formwerkzeug 9 aus. Es kann insbesondere auch eine glatte, insbesondere zylindrische Form ohne Wellung erzeugt werden. Auf das aus dem Formwerkzeug austretende Rohr 10 wird mittels eines Extruders 12 der Aussenmantel 13 aufextrudiert. Das fertige, thermisch gedämmte Wellrohr 14 kann auf Grund seiner Flexibilität auf Rollen aufgerollt werden. In einer aus WO 2010/085906 A1 bekannten Abwandlung des Verfahrens, wird nach dem Extrudieren des Aussenmantels eine Wellung in das Rohr 14 eingepresst. Diese Herstellungsarten sind bekannt und haben sich bewährt.

Die kontinuierliche Herstellung von glatten Rohren nach dem obigen Verfahren kann auch zur Bildung von geraden starren Rohren verwendet werden, welche in der gewünschten Länge vom kontinuierlich hergestellten, ungewellten Rohr abgelängt werden.

Eine weitere Herstellart für starre gerade Rohre ist aus WO 2010/127463 A1 bekannt, wobei das Innenrohr innerhalb des Aussenmantels durch Zug gerade gehalten und der Raum zwischen Innenrohr und Aussenmantel mittels mindestens einer manuell bedienten Schäumlanze ausgeschäumt wird. Figur 2 zeigt dieses bekannte Vorgehen grob schematisch im Längsschnitt mit dem Innenrohr 2, welches durch Zug, dargestellt durch die Pfeile F, innerhalb eines Aussenrohrs 33, welches den Aussenmantel 13 des fertigen Leitungsrohrs bildet, gerade gehalten wird. Mittels einer Schäumlanze 39 wird der Wärmedämmschaum in den Zwischenraum 40 zwischen den Rohren eingebracht. Die Zentrierung des Innenrohrs kann auch auf bekannte Weise durch Abstandshalter erfolgen anstelle der Zentrierung durch Zugkraft. Die erläuterten Vorgehensweisen sind dem Fachmann bekannt und werden hier nicht weiter erläutert. Wenn nachfolgend von der Herstellung von thermisch gedämmten Leitungsrohren gesprochen wird, so sind alle bekannten Herstellverfahren gemeint und umfasst.

Gemäss der vorliegenden Erfindung wird eine Barriere in das thermisch gedämmte Rohr eingebracht. Liegt diese in radialer Richtung gesehen ausserhalb der Wärmedämmung, so verhindert sie das Austreten von Gas aus dem Schaummaterial in die Umgebung und das Eintreten von Gas aus der Umgebung in das Schaummaterial. Die Barriere kann zusätzlich auch auf dem Innenrohr aufgebracht sein oder vom Innenrohr selber gebildet sein. In diesem Fall verhindert sie das Eindringen von aus dem Innenrohr diffundierendem (Wasser-) Dampf in die Wärmedämmung .

Die Dicke der Barriereschicht kann in einem breiten Bereich variieren, geeignet sind Dicken von 30-3000 µm, bevorzugt 50-300 µm. Überraschend wurde gefunden, dass die o.g. Polyketone selbst bei diesen geringen Dicken eine für die Anwendung angemessene Barrierewirkung erzielen. Wird die Barriere vom Aussenmantel selber und/oder vom Innenrohr selber gebildet, so kann deren Dicke zum Beispiel im Bereich von 0,5 mm bis 5 mm liegen.

Die Barriereschicht kann mit einem zusätzlichen Haftvermittler versehen werden. Bevorzugt ist die Barriereschicht jedoch frei von Haftvermittler. Wie eingangs erwähnt, ist es besonders vorteilhaft im Herstellungsverfahren der hier beschriebenen Leitungsrohre auf die Verwendung von Haftvermittlern zu verzichten.

Bei der Herstellung eines Wellrohrs mit dem generellen Ablauf gemäss Figur 1 kann dies so erfolgen, dass die Kunststoff-Folie 5, die zum Schlauch 6 geformt wird, eine Polyketone enthaltende oder aus Polyketonen bestehende Kunststoff-Folie ist. Damit entsteht die Barriere als eine vom Schlauch 6 gebildete Schicht, die den Polyurethanschaum umgibt. Das aus dem Formwerkzeug 9 austretende Rohr 10 ist bereits vor dem Extruder 12 mit der Barriere versehen und der Aussenmantel 13 wird auf die Barriere extrudiert. Dabei wird keine Haftvermittlerschicht benötigt, so dass der Aussenmantel 13 direkt auf die Barriere extrudiert werden kann. Das fertige Wellrohr 14 weist somit eine Barriereschicht auf, die zwischen dem Wärmedämmschaum und dem Aussenmantel liegt und mit Schaum und Mantel durch die Herstellung verbunden ist.

Wird auf die erläuterte Weise zunächst ein ungewelltes oder gewelltes Rohr erzeugt, in welches in einem nachfolgenden Schritt eine Wellung eingepresst wird, so ist die Barriere ebenfalls zwischen dem Wärmedämmschaum und dem Aussenmantel angeordnet.

Werden auf die erläuterte Weise ungewellte starre Rohrabschnitte als thermisch gedämmte Leitungsrohre erzeugt, die von einem kontinuierlich hergestellten Leitungsrohr abgelängt werden, so ist auch bei diesen Leitungsrohren die Barriere zwischen der Wärmedämmung und dem Aussenmantel angeordnet.

In allen Fällen können die Eigenschaften der Polyketone enthaltenden oder aus Polyketonen bestehenden Barriere, die bei diesen Beispielen eine durch die Folie gegebene Barriereschicht ist, durch die Wahl der Folie 5 bestimmt werden. Polyketon-Folien sind im Handel erhältlich, zum Beispiel von der Firma Lipp-Terler GmbH, Österreich. Bevorzugt ist eine Dicke der Barriere von 50 bis 300 µm. Entsprechend wird die Foliendicke gewählt.

Alternativ oder zusätzlich kann bei den erläuterten kontinuierlichen Verfahren die Barriere beim Aufbringen des Aussenmantels 13 mittels des entsprechend für Coextrusion ausgeführten Extruders 12 erzeugt werden. In einer ersten Ausführung findet eine Coextrusion von mindestens drei Schichten und insbesondere von genau drei Schichten statt. Bei dieser Ausführung wird zunächst direkt auf die aus Dämmschaum und Folie 5 gebildete Wärmedämmung mindestens eine Schicht des Aussenmantelmaterials, insbesondere eine PE-Schicht aufgebracht. Darauf folgend, insbesondere direkt darauf folgend, ohne eine Haftvermittlerschicht, wird mindestens eine Schicht des Polyketone enthaltenden Polymers aufgebracht oder eine Schicht des aus Polyketonen bestehenden Polymers aufgebracht. Darauf folgt mindestens eine weitere Schicht des Aussenmantelmaterials, insbesondere des PE-Materials, und dies insbesondere direkt, ohne dass dazwischen eine Haftvermittlerschicht aufgebracht wird. In einer anderen Ausführung findet eine Coextrusion von mindestens zwei Schichten statt und insbesondere von genau zwei Schichten. Zunächst wird dabei die Barriere als Schicht des Polyketone enthaltenden Polymers oder eine Schicht des aus Polyketonen bestehenden Polymers direkt auf die Wärmedämmung (bzw. auf die Folie 5 der Wärmedämmung) aufgebracht, ohne dass zunächst ein anderes Aussenmantelmaterial aufgebracht wird und danach wird auf diese Barriere das Aussenmantelmaterial aufgebracht.

Wird das Leitungsrohr als starres Leitungsrohrstück gemäss Figur 2 hergestellt, so wird die Barriere bzw. die Schicht des Polyketone enthaltenden Polymers oder eine Schicht des aus Polyketonen bestehenden Polymers als innerste Schicht bzw. Innenwandung des Aussenrohrs 33 bei dessen Bildung durch Coextrusion hergestellt oder bei der Bildung des Aussenrohrs 33 durch Coextrusion wird die Barriere innerhalb des Aussenrohrs gebildet, so dass sie zwischen Schichten des Aussenrohrmaterial liegt, die z.B. PE-Schichten sind. Insbesondere liegt dann die Barriere direkt zwischen zwei PE-Schichten des Aussenrohrs 33, ohne dazwischenliegende Haftvermittlerschichten. In allen Fällen kann die Barriere zusätzlich von einer Schicht auf der Aussenseite des Innenrohrs 2 gebildet sein oder vom Innenrohr selber, wenn es aus dem Barrierematerial gebildet ist. Das Innenrohr kann bereits bei der Herstellung mit der Barriere versehen worden sein, so dass diese bereits bei dem auf der Rolle 1 befindlichen Innenrohr vorhanden ist. Die Barriere kann aber auch durch einen Extrusionsprozess oder einen Beschichtungsprozess durch Sprühen oder Tauchen zwischen der Rolle 1 und der Bildung des Folienschlauchs mit der Barriere versehen werden. Ferner kann die Barriere beim Innenrohr 2 vor der Bildung des Folienschlauchs auch derart aufgebracht werden, dass auf das Innenrohr eine Folie aus einem Polymer gewickelt wird, welches Polyketone enthält oder aus Polyketonen besteht. Die Barriere wird dann durch diese Folienlage gebildet, auf welche nachfolgend der Schaum der Wärmedämmung zu liegen kommt. Bei der Herstellung eines starren Rohrs durch Zentrierung eines Innenrohrs innerhalb eines Aussenrohrs (durch Abstandshalter oder durch Zugkraft, wie erläutert) kann das Innenrohr ebenfalls auf alle erwähnten Arten mit einer äusseren Barriere aus einem Polyketone enthaltenden oder aus Polyketonen bestehendem Polymer versehen werden, also zum Beispiel ebenfalls durch Umwickeln mit einer Folie, bevor das Innenrohr in dem Aussenrohr zentriert wird. Ebenso kann das Innenrohr aus dem Polymer bestehen.

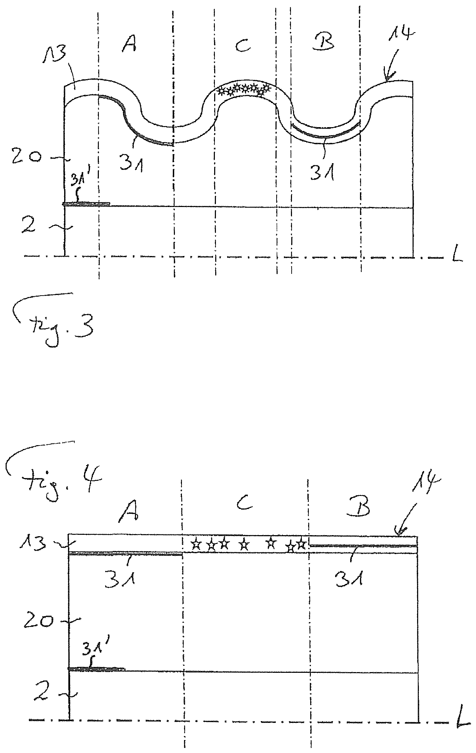

Die Figuren 3 und 4 zeigen jeweils grob schematisch einen Schnitt durch ein thermisch gedämmtes Leitungsrohr, wobei die Figur 3 ein flexibles Wellrohr darstellen soll und Figur 4 ein glattes starres Rohr. Es ist jeweils nur der Teil des Schnitts oberhalb der Mittellängsachse L des Leitungsrohrs dargestellt. Die Darstellung ist grob schematisch und die gezeigten Elemente sind nicht massstäblich gezeigt. In beiden Figuren sind verschiedene Varianten der Barriere als Beispiele in den Bereichen A bzw. B bzw. C dargestellt. In einem realen Leitungsrohr ist natürlich entlang der Längsachse des Rohrs jeweils nur eine diese Varianten vorhanden oder allenfalls sind kumulativ mehrere der Varianten vorhanden, es ist aber nicht die Abfolge A, C, B vorhanden, wie in den Figuren 3 und 4, wo dies nur zur vereinfachten Erläuterung verschiedener Beispiele so dargestellt ist. Zwischen den Bereichen A, B und C ist in den Figuren keine Barriere dargestellt. Das Innenrohr 2, welches ein Innenrohr aus Kunststoff oder Metall sein kann, ist von der Wärmedämmung 20 umgeben, welche insbesondere der zuvor erwähnte PU-Schaum ist. Über der Wärmedämmung 20 liegt der Aussenmantel 13, welcher ein gemäss Figur 1 extrudierter Aussenmantel sein kann oder von dem zuvor hergestellten Rohr 33 gemäss Figur 2 gebildet ist.

In Figur 3 ist ein Wellrohr dargestellt und im Bereich A von Figur 3 ist die Barriere 31 ersichtlich, welche, wie oben erläutert, so platziert worden ist, dass sie zwischen der Wärmedämmung 20 und dem Aussenmantel liegt. Dies kann so bewirkt worden sein, dass die Folie 5 bzw. der Schlauch 6 die Barriereeigenschaften hat. Oder es kann so bewirkt worden sein, dass die Extrusion des Aussenmantels mit der Extrusion einer Barriere begonnen hat oder dass das Rohr 33 innen die Barriere aufgewiesen hat. In Figur 4 ist diese Platzierung der Barriere 31 ebenfalls im Bereich A für ein glattes Leitungsrohr dargestellt.

Wird so vorgegangen, dass die Barriere während der Extrusion des Aussenmantels 13 durch den Extruder 12 oder bei der Herstellung des Rohrs 33 zwischen anderen Materialschichten des Aussenmantels bzw. des Rohrs 33 angeordnet wird, so ergibt sich die Situation wie sie im Bereich C des Leitungsrohrs der Figuren 3 bzw. 4 dargestellt ist. Die Barriere 31 befindet sich innerhalb des Aussenmantels 13. Insbesondere liegt sie direkt zwischen zwei Schichten des Aussenmantelmaterials ohne zusätzliche Haftvermittlerschichten. Nicht dargestellt ist eine weitere Variante, bei welcher die Barriere die äusserste Schicht des Aussenmantels bildet, was ebenfalls möglich ist. Die Varianten der Bereiche A und B können auch kombiniert sein, so dass sowohl eine Barriere 31 auf der Wärmedämmung liegt als auch eine weitere Barriere 31 im Aussenmantel angeordnet ist.

Im Bereich C von Figur 3 bzw. von Figur 4 ist eine weitere Variante für die Bildung der Barriere angedeutet. In diesem Fall ist das Polyketone enthaltende Polymer oder das aus Polyketonen bestehende Polymer direkt zur Bildung des Aussenmantels 13 bzw. des Rohrs 33 verwendet worden. Die Barriere ist dann keine "Schicht" innerhalb des Aussenmantels aus anderem Material sondern wird vom Aussenmantel 13 selber gebildet. Insbesondere, wenn der Aussenmantel vollständig aus einem aus Polyketonen bestehenden Polymer gebildet wird, ergibt sich eine Barriere, die aus dem ganzen Aussenmantel besteht. In den Bereichen C ist dies durch die Symbole angedeutet, die im Aussenmantel eingezeichnet sind.

In Figur 3 und Figur 4 ist in einem kurzen Abschnitt am linken Ende der Figuren eine Barriere 31' angedeutet, die auf dem Innenrohr liegt. Diese Barriere 31', aufgebracht als Schicht oder als Folienlage, kann vorhanden sein oder nicht und sie kann alleine vorgesehen sein oder mit allen Varianten der Barriere in radialer Richtung oberhalb der Wärmedämmung kombiniert sein, also mit den Varianten in den Bereichen A, B oder C.

Figur 5 zeigt einen Teil 30 einer Abdeckungsvorrichtung aus Kunststoff, wie sie gemäss WO 2008/019791 A1 bekanntermassen zum Umschliessen der Verbindungsstelle von thermisch gedämmten Leitungsrohren verwendet wird. An deren Verbindungsstelle sind die Leitungsrohre von der Wärmedämmung befreit worden, damit die jeweiligen Innenrohre verbunden werden konnten. Zur Wiederherstellung der thermischen Dämmung wird deshalb auf bekannte Weise ein PU-Schaum in die Abdeckungsvorrichtung eingebracht und füllt den Raum zwischen der Innenwand der Abdeckungsvorrichtung und den miteinander verbundenen Leitungsrohren. Es kann auch vorgesehen, dass eine Schicht des Polyketone enthaltenden Polymers oder eine Schicht des aus Polyketonen bestehenden Polymers an der Innenseite der Abdeckungsvorrichtung und/oder innerhalb des Materials der Abdeckungsvorrichtung vorgesehen ist so dass sich das Teil 30 gemäss Figur 5 im Schnitt so darstellt, wie der Aussenmantel 13 mit der Barriere 30 im Bereich A von Figur 4 oder wie der Aussenmantel mit der Barriere 30 im Bereich B von Figur 4. Die Abdeckungsvorrichtung kann auch aus einem Polyketone enthaltenden Polymer gebildet sein oder einem aus Polyketonen bestehenden Polymer gebildet sein, so dass sich das Teil gemäss Figur 5 im Schnitt so darstellt, wie der Aussenmantel 13 im Bereich C von Figur 4. Anstelle einer Schale gemäss Figur 5 kann auch eine Muffe zur an sich bekannten Verbindung von thermisch gedämmten Leitungsrohren vorgesehen sein. Auch die Muffe kann eine Barriere aus einem Polyketone enthaltendem Polymer aufweisen oder eine Barriere aus einem aus Polyketonen bestehendem Polymer.

Mit der Barriere gemäss der vorliegenden Erfindung, wird eine gute Barrierewirkung gegen die Gase der Luft (Sauerstoff und Stickstoff) und gegen die im PU-Schaum enthaltenen Gase, vor allem Kohlendioxid erzielt. Zudem ist diese Barriere bezüglich ihres Diffusionsverhaltens nicht stark abhängig von Feuchtigkeit. Ausserdem wird erzielt, dass die Barriere keine Haftvermittler benötigt um auf den relevanten Materialien wie PE zu haften. Ferner ist das Polyketone enthaltende oder aus Polyketonen bestehende Material nicht zu spröde, wodurch die Gefahr der Rissbildung bei mechanischer Beanspruchung gering ist.

Während in der vorliegenden Anmeldung bevorzugte Ausführungen der Erfindung beschrieben sind, ist darauf hinzuweisen, dass die Erfindung nicht auf diese beschränkt ist und in auch anderer Weise innerhalb des Umfangs der folgenden Ansprüche ausgeführt werden kann.

Die Erfindung wird anhand des nachfolgenden Beispiels näher erläutert.

Gemessen wurde die Permeation von Sauerstoff, Stickstoff, Kohlendioxid und Wasserdampf durch handelsübliche Folien bestehend aus aliphatischen Polyketon.

Zur Anwendung kamen Folien von zwei verschiedenen Herstellern, gekennzeichnet als PK1 und PK2, jeweils enthaltend >50 Gew.% aliphatische Polyketone der Formel (I). Die Folie PK1 mit einer Schichtdicke von 0.050 mm, die Folie PK2 mit einer Schichtdicke von 0.100 mm. Die angegeben Messergebnisse sind normiert auf die Schichtdicke von 0.050 mm. Die angegeben Messwerte sind der Durchschnitt aus zwei Einzelmessungen. Die Messung der Permeation von Sauerstoff und Stickstoff erfolgten gemäss der Norm ISO15105-2:2003, Annex A, 23 °C, 50 %r.F. Die Messung der Permeation von Kohlendioxid erfolgten gemäss der Norm ISO15105-2:2003, Annex A, 23 °C, 0 %r.F. Die Messung der Permeation von Wasserdampf erfolgte gemäss der Norm ISO15106-3:2005, 23 °C, 85 %r.F.

Zum Vergleich dazu sind die Werte für gewöhnliches Polyethylen geringer Dichte angegeben. Diese Werte entnommen sind entnommen: PU Magazin, Dez/Jan 2005/2006, Jahrgang 05, S. 264-267, ebenfalls normiert auf eine Schichtdicke von 0.050 mm.

**Tabelle 1: Permeation in cm3/m2*Tag*bar; normiert auf 0.050 mm Schichtdicke**

| | PK 1 | PK 2 | PE-LD |
|---|---|---|---|
| | gemäss Erfindung | | gemäss SdT |
| Sauerstoff | 12.9 | 19.8 | 4800 |
| Stickstoff | 7.50 | 6.60 | 1240 |
| Kohlendioxid | 298 | 120.6 | 16800 |
| Wasserdampf | 53.9 | 24.8 | |

Es zeigt sich, dass die Permeationswerte für aliphatisches Polyketon gemäss Folien PK1 und PK2 um Grössenordnungen besser sind.

## Patentansprüche

1. Thermisch gedämmtes Leitungsrohr (14),
umfassend mindestens ein Innenrohr (2), mindestens eine um das Innenrohr herum angeordnete Wärmedämmung (20) und mindestens einen um die Wärmedämmung herum angeordneten Aussenmantel (13) sowie
umfassend mindestens eine Barriere aus Kunststoff, welche ein Polymer umfasst, das Polyketone enthält oder aus Polyketonen besteht
**dadurch gekennzeichnet, dass** die Barriere als Schicht, welche die Diffusion von Gasen aus der Wärmedämmung hinaus und in die Wärmedämmung hinein reduziert,
(i) zwischen der Wärmedämmung und dem Aussenmantel angeordnet ist; oder
(ii) im Aussenmantel angeordnet ist.

2. Leitungsrohr nach Anspruch 1, **dadurch gekennzeichnet, dass** das Polymer zu 50 - 100 Gew.%, bevorzugt zu 90-100 Gew.% Struktureinheiten der Formel (I) enthält 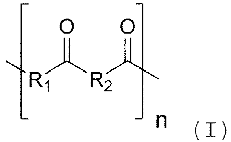 worin R¹ und R² unabhängig voneinander für Alkyl steht.

3. Leitungsrohr nach Anspruch 1, **dadurch gekennzeichnet, dass** die Barriere
als Schicht auf der Wärmedämmung und/oder als Schicht auf der Innenseite des Aussenmantels angeordnet ist; oder
vom Aussenmantel gebildet wird.

4. Leitungsrohr nach einem der Ansprüche 1 bis 3,
**dadurch gekennzeichnet, dass**
das Leitungsrohr ein Wellrohr ist; oder
das Leitungsrohr ein starres gerades Rohrstück ist.

5. Leitungsrohr nach einem der Ansprüche 1 bis 4, **dadurch gekennzeichnet, dass**
die Barriere eine Schicht ist, welche eine Dicke von 50 µm bis 300 µm aufweist; oder
die Barriere vom Aussenmantel gebildet wird und eine Dicke von 0,5 mm bis 5 mm aufweist.

6. Leitungsrohr nach einem der Ansprüche 1 bis 5, **dadurch gekennzeichnet, dass** das Polymer zu 50 - 100 Gew.%, bevorzugt zu 90-100 Gew.% Struktureinheiten der Formel (I) enthält 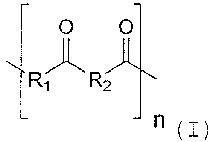 worin R¹ und R² unabhängig voneinander für Ethyl und Propyl steht.

7. Verfahren zur Herstellung eines thermisch gedämmten Leitungsrohrs (14) gemäss Anspruch 1 mit mindestens einem Innenrohr, einer Wärmedämmschicht und einem Aussenmantel, wobei
- das mindestens eine Innenrohr kontinuierlich von einem Vorrat abgezogen und mit einer zu einem Schlauch geformten Kunststofffolie umhüllt wird,
- in den Raum zwischen Innenrohr und Schlauch ein aufschäumbarer Kunststoff als Wärmedämmschicht eingebracht wird,
- das Innenrohr und der Schlauch in ein aus mitlaufenden Formteilen gebildetes Werkzeug eingebracht werden und dieses Werkzeug an dessen Ende verlassen, und danach
- auf die Oberfläche des Schlauches der Aussenmantel extrudiert wird,
**dadurch gekennzeichnet, dass** bei der Herstellung
(A) eine Barriere aus einem Polymer zwischen der aufgeschäumten Wärmedämmschicht und der Aussenseite des Aussenmantels eingebracht wird, oder
(B) dass der Aussenmantel aus dem Polymer gebildet wird oder
(C) dass der Aussenmantel aus dem Polymer besteht;
und wobei besagtes Polymer Polyketone enthält oder aus Polyketonen besteht.

8. Verfahren nach Anspruch 7, **dadurch gekennzeichnet, dass** die Barriere zwischen der aufgeschäumten Wärmedämmschicht und der Innenseite des Aussenmantels eingebracht wird, indem der Schlauch aus dem Polymer gebildet wird.

9. Verfahren nach Anspruch 7, **dadurch gekennzeichnet, dass** die Barriere durch Coextrusion zusammen mit dem Aussenmantel aufgebracht wird.

10. Verfahren nach Anspruch 9, **dadurch gekennzeichnet, dass** die Barriere direkt auf den Schlauch aufgebracht wird.

11. Verfahren nach Anspruch 9, **dadurch gekennzeichnet, dass** zunächst eine Schicht des Aussenmantels, gefolgt durch die Barriere und gefolgt durch mindestens eine zweite Schicht des Aussenmantels aufgebracht wird.

12. Diskontinuierliches Verfahren zur Herstellung eines thermisch gedämmten Leitungsrohrs (14) nach Anspruch 1 mit mindestens einem Innenrohr, einer Wärmedämmschicht und einem Aussenmantel, wobei
- ein Innenrohr innerhalb eines Aussenrohrs zentriert wird und
- der Raum zwischen dem Innenrohr und dem Aussenrohr mit einem thermisch dämmenden, geschäumten Kunststoffmaterial gefüllt wird,
**dadurch gekennzeichnet, dass** bei der Herstellung eine Barriere aus einem Polymer zwischen der aufgeschäumten Wärmedämmschicht und der Aussenseite des Aussenmantels eingebracht wird,
und wobei das Polymer Polyketone enthält oder aus Polyketonen besteht.

13. Verfahren nach Anspruch 12, **dadurch gekennzeichnet,**
**dass** die Barriere an der Innenseite des Aussenrohrs aufgebracht ist; und / oder.
**dass** die Barriere im Aussenrohr vorgesehen ist.

14. Verfahren nach Anspruch 12, **dadurch gekennzeichnet, dass** das Material des Aussenrohrs das Polymer enthält oder aus diesem besteht.

15. Verfahren nach einem der Ansprüche 7 bis 14, **dadurch gekennzeichnet, dass** das Polymer zu 50 - 100 Gew.%, bevorzugt zu 90-100 Gew.% Struktureinheiten der Formel (I) enthält 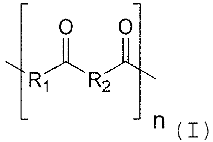 worin R¹ und R² unabhängig voneinander für Alkyl, insbesondere Ethyl und Propyl steht.

## Claims

1. Thermally insulated pipe (14),
comprising at least one inner tube (2), at least one thermal insulation (20) arranged around the inner tube and at least one outer shell (13) arranged around the thermal insulation, as well as
comprising at least one plastic barrier comprising a polymer that contains or consists of polyketones
**characterized in that** the barrier is in the form of a layer which reduces the diffusion of gas out of the thermal insulation and into the thermal insulation and
(i) is located between the thermal insulation and the outer shell; or
(ii) is located in the outer shell.

2. Pipe according to claim 1, **characterized in that** the polymer contains 50-100% by weight, preferably 90-100% by weight, of structural units according to formula (I) 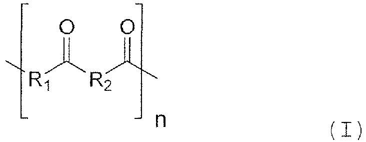 R¹ et R² being independently of each other an alkyl.

3. Pipe according to claim 1,
**characterized in that** the barrier is arranged in the form of a layer on the thermal insulation and/or in the form of a layer on the inner side of the outer shell
or is formed by the outer shell.

4. Pipe according to one of the claims 1 to 3, **characterized in that**
the pipe is a corrugated pipe; or
the pipe is a rigid straight pipe section.

5. A pipe according to one of the claims 1 to 4, **characterized in that** the barrier is a layer having a thickness of 50 µm to 300 µm; or
the barrier is formed by the outer shell and has a thickness of 0.5 mm to 5 mm.

6. Pipe according to one of the claims 1 to 5, **characterized in that** the polymer contains 50-100% by weight, preferably 90-100% by weight, of structural units according to formula (I) 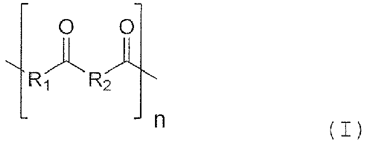 R¹ et R² being independently from one another ethyl or propyl.

7. Method for manufacturing a thermally insulated pipe (14) according to claim 1, with at least one inner tube, a thermal insulation and an outer shell,
- the at least one inner tube being unwound continuously from a stock and surrounded by a plastic sheet in the form of a conduit,
- a foaming plastic being introduced into the space between the inner tube and the thermal insulation as a thermally insulating layer,
- the inner tube and the conduit being introduced into a tool formed by moulding parts and this tool being left at its end, and then
- the outer shell being extruded onto the surface of the conduit,
**characterized in that** during manufacture
(A) a barrier of a polymer is introduced between the foamed thermal insulation layer and the outer surface of the outer shell, or
(B) the outer shell is formed by the polymer or
(C) the outer shell is made of the polymer;
and said polymer containing or consisting of polyketones.

8. Method according to claim 7, **characterized in that** the barrier is introduced between the foamed thermal insulation layer and the inner side of the outer shell by forming the conduit with the aid of the polymer.

9. Method according to claim 7, **characterized in that** the barrier is applied by coextrusion together with the outer shell.

10. Method according to claim 9, **characterized in that** the barrier is applied directly on the conduit.

11. Method according to claim 9, **characterized in that** at the beginning a layer of the outer shell is applied, followed by the barrier and followed by at least a second layer of the outer shell.

12. Batch process for manufacturing a thermally insulated pipe (14) according to claim 1, with at least one inner tube, a thermal insulator and an outer shell,
- an inner tube being centered inside an outer tube and
- the space between the inner tube and the outer tube being filled with a foamed plastic and heat insulating material,
**characterized in that** during manufacture a barrier of a polymer is introduced between the foamed thermal insulation layer and the outer face of the outer shell,
and the polymer containing or consisting of polyketones.

13. Method according to claim 12, **characterized in that** the barrier is applied to the inner side of the outer tube; and/or **in that** the barrier is provided in the outer tube.

14. Method according to claim 12, **characterized in that** the material of the outer tube comprises the polymer or consists of the polymer.

15. Method according to one of claims 7 to 14, **characterized in that** the polymer contains 50-100% by weight, preferably 90-100% by weight, of structural units according to formula (I) 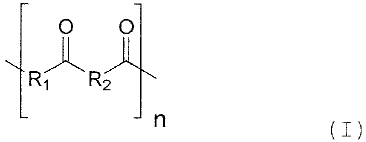 R1 and R2 being independently of each other alkyl, particularly ethyl or propyl.

## Revendications

1. Tuyau à isolation thermique (14),
comprenant au moins un tube intérieur (2), au moins un isolant thermique (20) disposé autour du tube intérieur et au moins une enveloppe extérieure (13) disposée autour de l'isolant thermique, ainsi que
comprenant au moins une barrière en plastique comprenant un polymère qui contient ou est constitué de polycétones
**caractérisé en ce que** la barrière se présente sous la forme d'une couche qui réduit la diffusion de gaz hors de l'isolation thermique et dans l'isolation thermique et
i) est situé entre l'isolation thermique et l'enveloppe extérieure; ou
ii) est située dans l'enveloppe extérieure.

2. Tuyau selon la revendication 1, **caractérisé en ce que** le polymère contient 50-100 % en poids, de préférence 90-100 % en poids, d'unités structurelles selon la formule (I) 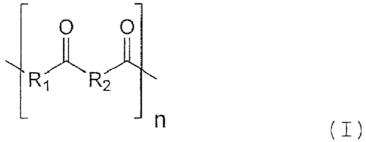 R¹ et R² étant indépendamment l'un de l'autre un alkyle.

3. Tuyau selon la revendication 1,
**caractérisé en ce que** la barrière est disposée sous la forme de couche sur l'isolation thermique et/ou sous la forme de couche du côté intérieur de l'enveloppe extérieure
ou est formée par l'enveloppe extérieure.

4. Tuyau selon l'une des revendications 1 à 3, **caractérisé en ce que**
le tuyau est un tuyau ondulé; ou
le tuyau est une section de conduite droite rigide.

5. Tuyau selon l'une des revendications 1 à 4, **caractérisé en ce que** la barrière est une couche ayant une épaisseur de 50 µm à 300 µm; ou
la barrière est formée par l'enveloppe extérieure et a une épaisseur de 0,5 mm à 5 mm.

6. Tuyau selon l'une des revendications 1 à 5, **caractérisé en ce que** le polymère contient 50-100 % en poids, de préférence 90-100 % en poids, d'unités structurelles selon la formule (I) 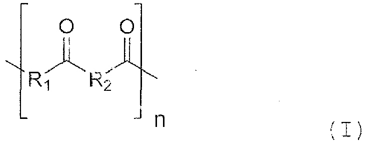 R¹ et R² étant indépendamment l'un de l'autre éthyle ou propyle.

7. Procédé pour la fabrication d'un tuyau à isolation thermique (14) selon la revendication 1 avec au moins un tube intérieur, un isolant thermique et une enveloppe extérieure,
- l'au moins un tube intérieur étant déroulé continument d'un stock et entouré d'une feuille en plastique en forme de conduit,
- un plastique moussant étant introduit dans l'espace entre le tube intérieur et l'isolant thermique comme couche thermiquement isolante,
- le tube intérieur et le conduit étant introduits dans un outil formé par des pièces de moulage et cet outil étant quitté à son extrémité, et ensuite
- l'enveloppe extérieure étant extrudée sur la surface du conduit,
**caractérisé en ce que** lors de la fabrication
(A) une barrière d'un polymère est introduite entre la couche d'isolation thermique moussée et la face extérieure de l'enveloppe extérieure, ou
(B) l'enveloppe extérieure est formée par le polymère ou
(C) l'enveloppe extérieure est constituée par le polymère;
et ledit polymère contenant ou étant constitué de polycétones.

8. Procédé selon la revendication 7, **caractérisé en ce que** la barrière est introduite entre la couche d'isolation thermique moussée et la face intérieure de l'enveloppe extérieure en formant le conduit à l'aide du polymère.

9. Procédé selon la revendication 7, **caractérisé en ce que** la barrière est appliquée par coextrusion ensemble avec l'enveloppe extérieure.

10. Procédé selon la revendication 9, **caractérisé en ce que** la barrière est appliquée directement sur le conduit.

11. Procédé selon la revendication 9, **caractérisé en ce qu'**au début une couche de l'enveloppe extérieure est appliquée, suivie par la barrière et suivie par au moins une deuxième couche de l'enveloppe extérieure.

12. Procédé discontinu pour la fabrication d'un tuyau à isolation thermique (14) selon la revendication 1 avec au moins un tube intérieur, un isolant thermique et une enveloppe extérieure,
- un tube intérieur étant centré à l'intérieur d'un tube extérieur et
- l'espace entre le tube intérieur et le tube extérieur étant rempli avec un matériau plastique moussé et isolant thermique,
**caractérisé en ce que** lors de la fabrication une barrière d'un polymère est introduite entre la couche d'isolation thermique moussée et la face extérieure de l'enveloppe extérieure,
et le polymère contenant ou étant constitué de polycétones.

13. Procédé selon la revendication 12, **caractérisé en ce que** la barrière est appliquée du côté intérieur du tube extérieur; et/ou **en ce que** la barrière est prévue dans le tube extérieur

14. Procédé selon la revendication 12, **caractérisé en ce que** le matériau du tube extérieur comprend le polymère ou consiste du polymère.

15. Procédé selon l'une des revendications 7 à 14, **caractérisé en ce que** le polymère contient 50-100 % en poids, de préférence 90-100 % en poids, d'unités structurelles selon la formule (I) 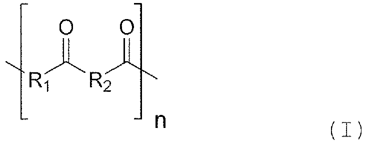 R¹ et R² étant indépendamment l'un de l'autre alkyle, particulièrement éthyle ou propyle.
